# EUROPÄISCHE PATENTSCHRIFT

(11) **EP 1 201 075 B1**
(45) Veröffentlichungstag und Bekanntmachung des Hinweises auf die Patenterteilung: **22.10.2003**
(21) Anmeldenummer: 00949276.0
(22) Anmeldetag: 06.07.2000
(51) Int. Cl.: H04M 11/00, H04L 12/12, H04N 1/327

(54) **ELEKTROGERÄT MIT NETZTEIL**
ELECTRIC APPLIANCE COMPRISING A POWER SUPPLY UNIT
APPAREIL ELECTRIQUE COMPORTANT UN BLOC D'ALIMENTATION

(30) Priorität: 12.07.1999 DE 19932453
(43) Veröffentlichungstag der Anmeldung: 02.05.2002
(73) Patentinhaber: BSH Bosch und Siemens Hausgeräte GmbH, 81669 München (DE)
(72) Erfinder: HAS, Uwe, D-84579 Unterneukirchen-Oberschroffen (DE)
(86) Internationale Anmeldenummer: EP0006410
(87) Internationale Veröffentlichungsnummer: WO01005132

(56) Entgegenhaltungen:
- EP-A- 0 358 441
- EP-A- 0 806 825
- DE-A- 4 401 406

## Beschreibung

Die vorliegende Erfindung betrifft ein Elektrogerät mit einer Steuereinheit und zumindest einem an einem Spannungsversorgungsnetz liegenden und über einen Schalter schaltbaren Netzteil zur Versorgung von zu steuemden Funktionseinheiten und der Steuereinheit, die über Leitungen an ein geräteextemes Datennetz anschließbar ist, über das Steuersignale, insbesondere ein Rufsignal, an die Steuereinheit gesendet werden, um eine Datenübertragung vom oder zum Elektrogerät zu starten, sowie ein entsprechend ausgebildetes Transformatornetzteil und eine Steuerkarte für ein entsprechendes Elektrogerät.

Ein derartiges Elektrogerät bzw. eine derartige Steuerkarte sind bekannt aus der Druckschrift DE 197 02 562 A1, wobei eine Steuerkarte zum Femschalten von Geräten/ Anlagen über das Telefonnetz beschrieben ist. Die Steuerkarte weist wenigsten drei Anschlußbuchsen mit internen Schaltern auf, so daß wenigstens drei Geräte ferngeschaltet werden können. Die Schalter, vorzugsweise Relais, werden mit Hilfe einer frequenzcodierten Ziffernkombination, die vom Benutzer eingegeben wird, von einer Systemsteuerung der Steuerkarte angesteuert und geschaltet, und/oder es wird zur Kontrolle der Schaltzustand abgefragt. Die Steuerkarte wird mit einer Spannung von etwa 9 bis 18 V betrieben, wobei die am Netzanschluß an der Steuerkarte anliegende Spannung heruntertransformiert wird oder die Versorgungsspannung von Batterien oder einem Trafo zur Verfügung gestellt wird. Die zu schaltenden Geräte werden mit ihrem Geräteanschluß, meist dem Netzstecker, mit den Anschlußbuchsen der Steuerkarte verbunden. Intern sind die Anschlußbuchsen über Stromleitungen mit dem Netzanschluß der Steuerkarte verbunden, womit die angeschlossenen Geräte mit Strom versorgt werden können. Jeder Anschlußbuchse ist ein Schalter zugeordnet, mit dem die entsprechende Stromleitung unterbrochen und somit das angeschlossene Gerät geschaltet werden kann. Die Schalter werden von der Systemsteuerung über Steuerleitungen angesteuert, wobei die Systemsteuerung in der Lage ist, den Schaltzustand der Schalter abzufragen und/oder zu ändem.

Weiterhin ist aus der Druckschrift DE 44 20 684 A1 eine Schaltungsanordnung für eine mit einer Telefonleitung verbindbare Last bekannt. Diese Schaltungsanordnung ermöglicht die Ansteuerung in Abhängigkeit der am Eingang der Schaltungsanordnung anstehenden Signale. Die Anordnung ist dahingehend ausgebildet, daß beim Auftreten eines Klingelsignals funktionssicher die Last eingeschaltet und nach Beendigung einer Informationsübertragung sowie unabhängig von derer Zeitdauer die Abschaltung durchgeführt wird. Als Last kann beispielsweise ein Faxgerät, ein Anrufbeantworter oder PC mit integrierter Faxkarte vorgesehen sein. Zur Stromversorgung von auf der Schaltungsanordnung vorgesehenen Bauelementen liegt die Schaltungsanordnung an einer Gleichspannung von insbesondere 12 V.

Weiterhin ist aus der Druckschrift DE 195 12 204 A1 eine Stromversorgung für einen Personal Computer bekannt. Dabei ist eine integrierte Steuer- und Überwachungseinheit vorgesehen, die den Datenverkehr zum PC überwacht und im Falle einer Datenübertragung die Stromversorgung aktiviert und damit den PC einschaltet. Dadurch ist der Energieverbrauch des PCs in den Zeiten minimiert, in denen er nicht benötigt wird.

Die Druckschrift EP-A-0 358 441 offenbart alle Merkmale des Oberbegriffs des Anspruchs 1.

Aufgabe der vorliegenden Erfindung ist es, ein Elektrogerät bzw. ein Transformatornetzteil oder eine Steuerkarte für ein Elektrogerät mit einem Standby-Energieverbrauch von 0 bereitzustellen.

Erfindungsgemäß ist dies bei einem Elektrogerät mit den Merkmalen des Patentanspruches 1 erreicht.

Da im Ruhezustand bzw. im Standby-Betrieb des Elektrogerätes der Schalter das Netzteil des Elektrogerätes primärseitig vom Spannungsversorgungsnetz trennt, ist sichergestellt, daß auch die Leerlaufverluste des Netzgerätes praktisch 0 sind. Weiterhin kann auf jegliche Energieversorgung des Elektrogerätes im Standby-Betrieb verzichtet werden, da das Rufsignal selbst mit seiner geringen elektrischen Energie den elektrischen Schalter zur Aktivierung des Elektrogerätes bei Bedarf schließt. Wichtig dabei ist, daß die Energiemenge, die zum Schalten des das Netzteil schaltenden Schalters benötigt wird, in der Größenordnung bleibt, die zum Betrieb beispielsweise eines Leutwerkes eines Telefons oder eines Faxgerätes ohnehin notwendig ist. Dadurch können die Vorschriften eingehalten werden, die den Entzug von elektrischer Energie beispielsweise aus dem Datennetz der Telefongesellschaften beschränken bzw. untersagen.

Um beim Schaltvorgang möglichst wenig Energie aus dem Datennetz zu ziehen, dient vorteilhafterweise als elektrischer Schalter ein Optokoppler-Bauelement.

Gemäß einer bevorzugten Ausführungsform sind der Schalter und die Steuereinheit über eine Schaltersteuerleitung verbunden. Dadurch ist sichergestellt, daß nach Aktivierung des Elektrogerätes die Steuereinheit die Kontrolle über den Schalter übernehmen kann. Insbesondere kann durch die Steuereinheit nach Beendigung der Datenübertragung oder des vom Elektrogerät auszuführenden Prozesses definiert den Schalter betätigen und das Elektrogerät primärseitig vom Netz nehmen.

Nachfolgend ist anhand einer schematischen Darstellung ein Ausführungsbeispiel eines erfindungsgemäßen Elektrogerätes bzw. eines Transformatometzteiles beschrieben (Fig.). Ein Elektrogerät wie beispielsweise ein Faxgerät oder ein elektrisches Haushaltsgerät, z.B ein Herd mit elektrischer Uhreinheit, weist eine Elektronik 1 auf. Diese umfaßt beispielsweise einen Prozessor, Tasten, Displays und ähnliches zur Eingabe, Ausgabe und Steuerung des Elektrogerätes. Die Elektronik 1 und auch die gegebenenfalls vorhandenen Leistungsverbraucher, wie beispielsweise Heizelemente eines Herdes, werden von einem Netzteil 3, 5 gespeist, das primärseitig an ein Spannungsversorgungsnetz L, N geschaltet ist. Das Netzgerät 3, 5 weist insbeondere einen Transformator 3 und eine nachgeschaltete Gleichrichterbrücke 5 auf, die über eine Spannungsversorgungsleitung 7 mit der Elektronik 1 verbunden ist. Von der Elektronik 1 gehen unter anderem Steuerleitungen 9 zur Steuerung von Verbrauchern des Elektrogerätes aus. Weiterhin ist das Elektrogerät mit einem externen Datennetz 11 verbunden, wie beispielsweise dem Telefonnetz oder gebräuchlichen Datennetzen für Haushaltsgeräte oder einem Bussystem. Dazu ist die Elektronik 1 des Elektrogerätes über interne Datenleitungen 13 an das externe Datennetz 11 geschaltet. Insbesondere ist im Elektrogerät eine Rufleitung 15 vorgesehen, die mit einer entsprechenden Leitung des externen Datennetzes 11 verbunden ist. Diese Rufleitung 15 ist geräteintern zum einen über eine Auskoppeldiode 17 und eine Schalteinheit 19 mit einem Optokoppler 21 verbunden. Zum anderen ist die Rufleitung 15 direkt mit der Elektronik 1 verbunden. Weiterhin ist auch eine Schaltersteuerleitung 23 vorgesehen, die die Elektronik 1 mit der Schalteinheit 19 verbindet. Ein als Schalter dienender Optokoppler 21 ist in den Primärkreis des Transformators 3 geschaltet.

Die Funktion der schematisch dargestellten Anordnung ist wie folgt: Wenn sich das Gerät im Standby-Betrieb bzw. Ruhezustand befindet, ist der Schalter 21 geöffnet. D.h. das Netzteil 3, 5 ist primärseitig vom Spannungsversorgungsnetz L, N getrennt. Der Energieverbrauch der Elektronik 1 bzw. des vom Netzteil 3, 5 gespeisten Elektrogerätes ist praktisch 0. Liegt nun ein Betriebswunsch vor, kann das Elektrogerät einerseits manuell über einen nicht näher gezeigten Hauptschalter eingeschaltet werden. Andererseits kann das Einschalten des Elektrogerätes auch ferngesteuert über das externe Datennetz 11 erfolgen. Dazu liegt beispielsweise an der Rufleitung 15 kurzzeitig ein Rufsignal an. Dies kann beispielsweise das bekannte "Klingelsignal" -ein Wechselspannungssignal von 60 VACoder irgend ein anderes gepulstes Spannungssignal sein. Im Standby-Betrieb bzw. völlig spannungslosen Betrieb des Elektrogerätes ist der Eingang der Rufleitung 15 so geschaltet, daß praktisch alle Energie des Rufsignals über die Auskoppeldiode 17 zur Schaltungseinheit 19 gelangt. Diese kann beispielsweise als Ladungsspeicher mit einem Schwellwertschalter ausgeführt sein. Bereits eine Signaldauer von wenigen ms bei einem Eingangsstrom von wenigen mA ist ausreichend, ausreichend Energie bereitzustellen, um damit den Optokoppler 21 zu schalten. Dabei ist die Schalteinheit 19 jeweils so gestaltet, daß sie entsprechend dem gewählten Optokoppler 21 bzw. Schaltelement und der an der Rufleitung 15 zu Verfügung stehenden elektrischen Energie zum Schalten des Optokopplers 21 sicher ausreicht. Durch das Schließen des Schalters 21 liegt das Netzteil 3, 5 primärseitig am Spannungsversorgungsnetz L, N. Die Elektronik 1 und alle anderen Komponenten des Elektrogerätes liegen an Spannung. Das Elektrogerät ist betriebsbereit, und die Datenkommunikation zwischen der Elektronik 1 und dem externen Datennetz 11 kann erfolgen. Über die Schaltersteuerleitung 23 hält die Elektronik 1 den Schalter 21 geschlossen, solange es erforderlich ist. Nach dem gewünschten und per Datenübertragung vorgegebenen Betrieb des Elektrogerätes schaltet die Elektronik 1 oder ein unabhängiges Zeitschaltglied erneut den Optokoppler 21 und trennt somit das Elektrogerät wieder primärseitig vom Spannungsversorgungsnetz L, N. Das Gerät ist nun wieder völlig spannungslos geschaltet und trotzdem jederzeit betriebsbereit.

Die erfindungsgemäße Anordnung kann sowohl im Elektrogerät als auch in einem Transformatornetzteil für das Elektrogerät oder in einer Steuerkarte für das Elektrogerät realisiert sein.

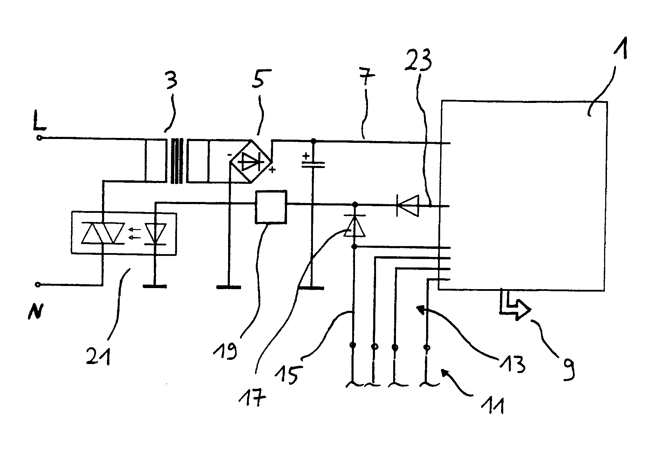

## Patentansprüche

1. Elektrogerät mit einer Steuereinheit (1) und zumindest einem an einem Spannungsversorgungsnetz ( L, N) liegenden und über einen Schalter (21) schaltbaren Netzteil (3, 5) zur Versorgung von zu steuernden Funktionseinheiten des Elektrogerätes und der Steuereinheit (1) , die über Leitungen (13, 15) an ein geräteexternes Datennetz (11) ansschließbar ist, über das Steuersignale, insbesondere ein Rufsignal, an die Steuereinheit (1) gesendet werden, um eine Datenübertragung vom oder zum Elektrogerät zu starten, und der Schalter (21) das Netzteil (3, 5) des Elektrogerätes im Ruhezustand primärseitig vom Spannungsversorgungsnetz (L, N) trennt, und das Rufsignal mit seiner Energie den elektrischen Schalter (21) schließt, **dadurch gekennzeichnet, dass** die Energie zum Aufrechterhalten des Schließzustandes des Schalters (21) dem Netzteil (3, 5) entnommen ist.

2. Elektrogerät nach dem Oberbegriff des Anspruchs 1, **dadurch gekennzeichnet, dass** die Energie zum Aufrechterhalten des Schließzustandes des Schalters (21) und zum Öffnen des Schalters (21) dem Netzteil (3, 5) entnommen ist.

3. Elektrogerät nach Anspruch 1 oder 2, **dadurch gekennzeichnet, dass** als elektrischer Schalter ein Optokoppler (21) dient.

4. Elektrogerät nach einem der Ansprüche 1 bis 3, **dadurch gekennzeichnet, dass** der Schalter (21) und die Steuereinheit (1) über eine Schaltersteuerleitung (23) verbunden sind.

## Claims

1. Electrical apparatus with a control unit (1) and at least one power supply unit (3, 5), which lies at a voltage supply mains (L, N) and is switchable by way of a switch (21), for supply of functional units, which are to be controlled, of the electrical apparatus and the control unit (1), which is connectible by way of lines (13, 15) with a data network (11) external to the apparatus, by way of which control signals, particularly a call signal, are transmitted to the control unit (1) in order to start data transmission from or to the electrical apparatus, and the switch (21) separates the power supply unit (3, 5) of the electrical apparatus in the rest state at the primary side from the voltage supply mains (L, N), and the call signal closes, by the energy thereof, the electrical switch (21), **characterised in that** the energy for maintaining the closed state of the switch (21) is derived from the power supply unit (3, 5).

2. Electrical apparatus according to the introductory part of claim 1, **characterised in that** the energy for maintenance of the closed state of the switch (21) and for opening the switch (21) is derived from the power supply unit (3, 5).

3. Electrical apparatus according to claim 1 or 2, **characterised in that** an optical coupler (21) serves as electrical switch.

4. Electrical apparatus according to one of claims 1 to 3, **characterised in that** the switch (21) and the control unit (1) are connected by way of a switch control line (23).

## Revendications

1. Appareil électrique doté d'une unité de commande (1) et d'au moins un bloc d'alimentation (3, 5) relié au réseau (L, N) d'alimentation en tension et commutable par l'intermédiaire d'un commutateur (21) pour l'alimentation d'unités fonctionnelles à commander de l'appareil électrique et de l'unité de commande (1) qui peut être raccordée par des lignes (13, 15) à un réseau de données (11) externe à l'appareil, par l'intermédiaire duquel des signaux de commande, en particulier un signal d'appel, peut être envoyé à l'unité de commande (1) pour lancer un transfert de données vers ou depuis l'appareil électrique, le commutateur (21) séparant à l'état de repos le côté primaire du bloc d'alimentation (3, 5) de l'appareil électrique vis-à-vis du réseau (L, N) d'alimentation en tension et le signal d'appel fermant le commutateur électrique (21) par son énergie, **caractérisé en ce que** l'énergie de maintien de l'état de fermeture du commutateur (21) est prélevée sur le bloc d'alimentation (3, 5).

2. Appareil électrique selon le préambule de la revendication 1, **caractérisé en ce que** l'énergie de maintien de l'état de fermeture du commutateur (21) et d'ouverture du commutateur (21) est prélevée sur le bloc d'alimentation (3, 5).

3. Appareil électrique selon la revendication 1 ou 2, **caractérisé en ce qu'**un optocoupleur (21) sert de commutateur électrique.

4. Appareil électrique selon l'une des revendications 1 à 3, **caractérisé en ce que** le commutateur (21) et l'unité de commande (1) sont reliés par l'intermédiaire d'une ligne (23) de commande du commutateur.
